Europäisches Patentamt

European Patent Office

Office européen des brevets

(11) Veröffentlichungsnummer : **0 059 322**
**B1**

# EUROPÄISCHE PATENTSCHRIFT

(45) Veröffentlichungstag der Patentschrift :
28.08.85

(21) Anmeldenummer : 82100632.7

(22) Anmeldetag : 29.01.82

(51) Int. Cl.⁴ : **C 09 K   5/04**, C 09 K   5/02,
F 25 B 29/00

(54) **Verwendung eines nichtazeotropischen Arbeitsmittelgemischs für Wärmepumpen.**

(30) Priorität : 13.02.81 DE 3105372

(43) Veröffentlichungstag der Anmeldung :
08.09.82 Patentblatt 82/36

(45) Bekanntmachung des Hinweises auf die Patenterteilung : 28.08.85 Patentblatt 85/35

(84) Benannte Vertragsstaaten :
AT BE CH FR GB IT LI LU NL SE

(56) Entgegenhaltungen :
EP-A- 0 021 416
DE-A- 1 419 629
DE-A- 1 719 519
US-A- 2 938 362
Die Akte enthält technische Angaben, die nach dem
Eingang der Anmeldung eingereicht wurden und die
nicht in dieser Patentschrift enthalten sind.

(73) Patentinhaber : **Gerbert, Heinz, Dipl.-Ing.**
**Panoramaweg 2**
**D-7951 Erlenmoos (DE)**

(72) Erfinder : **Gerbert, Heinz, Dipl.-Ing.**
**Panoramaweg 2**
**D-7951 Erlenmoos (DE)**

(74) Vertreter : **Zeitler, Giselher**
**Postfach 26 02 51**
**D-8000 München 26 (DE)**

Jouve, 18, rue St-Denis, 75001 Paris, France

**Beschreibung**

Die heute auf dem Markt befindlichen Wärmepumpen werden mit Einstoffkältemitteln betrieben, wobei je nach Einsatzzweck R 12 (= Dichloridfluormethan) oder R 22 (= Chloridfluormethan) zur Anwendung gelangt. Darüber hinaus ist es auch bekannt, bei einer Wärmepumpe anstelle der obengenannten Einstoffkältemittel das Kältemittel R 502 zu verwenden, das ein azeotropes Kältemittelgemisch aus R 22 und R 115 (= Chlorpentafluoräthan) mit dem Gewichtsanteil $\xi$ der erstgenannten Komponente = 0,49 kg/kg darstellt und in bestimmten Betriebssituationen gewisse Vorteile gegenüber beispielsweise dem Einstoffkältemittel R 22 aufweist. Da sich jedoch ein solches azeotropes Kältemittelgemisch hinsichtlich des Verhaltens beim Wechsel des Aggregatzustandes wie ein Einstoffkältemittel verhält, d. h. bei konstanter Temperatur verdampft und kondensiert, weist es grundsätzlich die gleichen Nachteile wie die vorgenannten Einstoffkältemittel auf.

Diese Nachteile sind darin zu sehen, daß bei absinkenden Temperaturen des Primärenergiemediums, d. h. der Sonnen-, Luft- oder Erdwärme, die volumetrische Leistung stark absinkt und das Druckverhältnis stark ansteigt. Beide Faktoren bewirken ein starkes Abfallen der Wärmepumpenleistung, wenn sich die Temperatur des jeweiligen Primärenergiemediums der 0 °C-Grenze nähert. Speziell für bivalent betriebene Luftwärmepumpen wird deshalb der Abschaltpunkt auf + 5 °C bis + 3 °C festgelegt. Dies hat zur Folge, daß Wärmepumpen, die ihre Primärenergie aus der Luft entnehmen, zur monovalenten Vollheizung z. Zt. wirtschaftlich nicht geeignet sind. Bei Erdkollektor-Wärmepumpen müssen große Kollektorflächen installiert werden, um bestimmte Temperaturgrenzen nicht zu unterschreiten.

Zur Beseitigung der vorgenannten Nachteile ist es auch schon bekannt, in einer Wärmepumpe ein ganz spezielles nichtazeotropes Arbeitsmittelgemisch einzusetzen, und zwar R 12/R 13 B1 (US-A-2 938 362) bzw. R 13 B1/R 152a (EP-A 21 416). Dies erfolgt jedoch ausschließlich in Verbindung mit dem jeweils angegebenen besonderen Gemisch sowie bei einer in aufwendiger Weise konstruktiv umgestalteten Wärmepumpe, was aus technischen sowie preislichen Gründen unakzeptabel ist.

Der Erfindung liegt daher die Aufgabe zugrunde, eine Lösung für handelsübliche Wärmepumpen aufzuzeigen, so daß solche Wärmepumpen bei gleicher Ausrüstung und etwa gleichem Anschaffungspreis höhere spezifische Wärmeleistungen erreichen und auch bei unter 0 °C liegenden Primärenergietemperaturen noch wirtschaftlich betrieben werden können, um ohne Veränderung des konstruktiven Aufbaus einer solchen Wärmepumpe lediglich durch Verwendung des betreffenden Arbeitsmittelgemisches den starken Abfall der volumetrischen Leistung und den starken Anstieg des Druckverhältnisses bei sinkenden Primärenergietemperaturen zu verringern und damit den Liefergrad des Verdichters zu verbessern.

Diese Aufgabe wird durch die Merkmale des Anspruchs 1 gelöst. Vorteilhafte Weiterbildungen der Erfindung sind in den weiteren Ansprüchen angegeben.

Die Erfindung liegt in der Verwendung eines nichtazeotropen Arbeitsmittelgemischs für handelsübliche, nach dem Kompressionsprinzip betriebene, durch ein Expansionsventil bzw. Kapillarrohr gesteuerte Wärmepumpen, das aus der nachstehenden Gruppe von Zwei- oder Mehrstoffhalogenkohlenwasserstoffgemischen mit der jeweils angegebenen Zusammensetzung und dem jeweils angegebenen Gewichtsanteil $\xi$ der erstgenannten Komponente ausgewählt ist:

$CH F_2 Cl/C F_3 Cl$, $\xi = 0,75\text{-}0,90$ kg/kg
$C F_2 Cl_2/C F_3 Cl$, $\xi = 0,7\text{-}0,9$ kg/kg
$CH F_2 Cl/C F_3 Br$, $\xi = 0,10\text{-}0,65$ kg/kg
$C F_2 Cl_2/C F_3 Br$, $\xi = 0,1\text{-}0,5$ kg/kg
$C F_2 Cl C F_3/C F_3 Br$, $\xi = 0,05\text{-}0,65$ kg/kg
$[CH F_2 Cl/C F_2 Cl C F_3]/C F_3 Br$, $\xi = 0,15\text{-}0,35$ kg/kg
$C F_2 Cl_2/CH F_2 Cl$, $\xi = 0,30\text{-}0,65$ kg/kg
$C F_2 Cl C F_2Cl/CH F_2 Cl$, $\xi = 0,30\text{-}0,65$ kg/kg
$CH F Cl_2/CH F_2 Cl$, $\xi = 0,30\text{-}0,65$ kg/kg

Von besonderer Bedeutung ist bei der Erfindung weiterhin, zur wirtschaftlichen Regelung der Wärmepumpe ein speziell gefülltes Expansionsventil zu verwenden, und zwar derart, daß nicht nur der Arbeitsmittelkreis der Wärmepumpe mit dem betreffenden nichtazeotropen Halogenkohlenwasserstoffgemisch, sondern auch das Steuerglied dieses Expansionsventils mit dem gleichen nichtazeotropen Halogenkohlenwasserstoffgemisch gefüllt ist. Hierbei ist es in Abwandlung oder Weiterbildung der Erfindung auch möglich, das Steuerglied des Expansionsventils lediglich mit einem solchen Gemisch zu füllen, das zu dem in den Arbeitsmittelkreis der Wärmepumpe eingefüllten nichtazeotropen Halogenkohlenwasserstoffgemisch physikalisch ähnlich ist. Weiter kann das Steuerglied auch nur mit der tiefersiedenden Komponente gefüllt sein. Anstelle des Expansionsventils kann auch ein Kapillarrohr verwendet werden.

Bei einer derart betriebenen Wärmepumpe ergibt sich der entscheidende Vorteil, daß die Primärenergietemperaturen unter 0 °C liegen dürfen und daß dennoch die Wärmeleistung der Wärmepumpe wesentlich größer ist als bei einer mit den bekannten Einstoffkältemitteln betriebenen Wärmepumpe.

Im Gegensatz zu den bekannten Einstoffkältemitteln oder azeotropen Arbeitsmittelgemischen liegt der wesentliche Unterschied in der erfindungsgemäßen Verwendung des nichtazeotropen Halogenkohlenwasserstoffgemischs darin, daß bei letzterem der Wechsel vom flüssigen zum dampfförmigen Zustand bzw. umgekehrt nicht bei konstanter Temperatur, sondern in einem Temperaturband stattfindet. Dieses beim Phasenwechsel auftretende Temperaturband ermöglicht es, den Temperaturverlauf des nichtazeotropen Halogenkohlenwasserstoffgemischs dem Temperaturverlauf des jeweiligen Primärenergiemediums anzupassen, so daß durch geeignete Auswahl der Konzentration es nichtazeotropen Halogenkohlenwasserstoffgemisches eine Optimierung der einzelnen Eigenschaften des Arbeitsmittels erfolgen kann, da durch die Konzentration des jeweiligen nichtazeotropen Halogenkohlenwasserstoffgemischs die Wärmeleistung, das Druckverhältnis, die Druckdifferenz, die Verdichtungsendtemperatur und auch das Ölverhalten unterschiedlich stark beeinflußt werden.

Der Einsatz von nichtazeotropen Arbeitsmittelgemischen ist zwar schon, wie eingangs dargelegt, grundsätzlich bekannt, jedoch hat sich gezeigt, daß in der Fachwelt ein Vorurteil gegen den Einsatz von nichtazeotropen Arbeitsmittelgemischen in handelsüblichen Wärmepumpen bestand, da man glaubte, die unterschiedlichen Eigenschaften der einzelnen Komponenten eines nichtazeotropen Arbeitsmittelgemischs technisch nur in einer ganz speziell ausgebildeten umkonstruierten Wärmepumpe beherrschen zu können. Durch die Erfindung ist dieses technische Vorurteil jedoch überraschenderweise als widerlegt bzw. als beseitigt anzusehen.

Wenn das nichtazeotrope Halogenkohlenwasserstoffgemisch gemäß der Erfindung in dem oben angegebenen Konzentrationsbereich, d. h. dem jeweils angegebenen Bereich des Gewichtsanteils $\xi$ der jeweils erstgenannten Komponente, verwendet wird, werden optimale Betriebsbedingungen, wie hohe spezifische Wärmeleistung, niedrige Druckverhältnisse, niedrige Heißgastemperaturen und zulässige Heizungsvorlauftemperaturen, erzielt.

Besondere Vorteile ergeben sich jedoch, wenn für das jeweils genannte nichtazeotrope Halogenkohlenwasserstoffgemisch die folgenden Mischungsverhältnisgrenzen ($\xi$ = Gewichtsanteil der jeweils erstgenannten Komponente) eingehalten werden :

$CH F_2 Cl/C F_3 Cl$, $\xi$ = 0,85-0,90 kg/kg
$C F_2 Cl_2/C F_3 Cl$, $\xi$ = 0,8-0,9 kg/kg
$CH F_2 Cl/C F_3 Br$, $\xi$ = 0,2-0,4 kg/kg
$C F_2 Cl_2/C F_3 Br$, $\xi$ = 0,35-0,50 kg/kg
$C F_2 Cl CF_3/C F_3 Br$, $\xi$ = 0,3-0,5 kg/kg
$CH F_2 Cl/CF_2 Cl CF_3/C F_3 Br$, $\xi$ = 0,2-0,3 kg/kg
$C F_2 Cl_2/CH F_2 Cl$, $\xi$ = 0,4-0,6 kg/kg
$C F_2 Cl CF_2 Cl/CH F_2 Cl$, $\xi$ = 0,4-0,6 kg/kg
$CH F Cl_2/CH F_2 Cl$, $\xi$ = 0,4-0,6 kg/kg.

Da die verlustarme Leistungsregelung ein Hauptproblem der Wärmepumpe darstellt, bestehen spezielle Vorteile des erfindungsgemäßen nichtazeotropen Halogenkohlenwasserstoffgemisches darin, daß durch die geeignete Auswahl der Konzentration der einzelnen Gemischkomponenten die Wärmeleistung, das Druckverhältnis und die Temperaturdifferenzen weitgehend den optimalen Bedingungen der verschiedenen Heizungswärmepumpensysteme angepaßt werden können. Es läßt sich daher außer der primär gewünschten Leistungsverbesserung auch eine Verringerung des Verhältnisses zwischen Kondensations- und Verdampfungsdruck erzielen. Dies führt zu einer Erhöhung des Liefergrades und wirkt sich außerdem vorteilhaft auf die Geräuschentwicklung sowie Lebensdauer der Wärmepumpe aus. Durch die Optimierung des Mischungsverhältnisses der einzelnen Komponenten des erfindungsgemäßen nichtazeotropen Halogenkohlenwasserstoffgemisches können bei einem vorgegebenen Primärenergiewärmetauscher für eine Luft-, Erd- oder Energieblockwärmepumpe der als Primärenergiemedium dienenden Luft oder Erde bei gleicher Temperatur der Medien 25-50 % mehr Primärenergie entzogen werden, so daß von der Wärmepumpe auch bei Temperaturen unter 0 °C hohe Leistungen abgegeben werden können. Dies bedeutet, daß solche Wärmepumpen, wie z. B. Luftwärmepumpen oder mit Energiezaun bzw. Energieblock betriebene Wärmepumpen, die bisher nur für bivalenten Heizungsbetrieb geeignet waren, nun auch zur monovalenten Beheizung eines Hauses mit Niedertemperaturheizung herangezogen werden können. Weiterhin können auch Erdwärmepumpen bis zu 45 % höhere Leistung erbringen, ohne daß es erforderlich ist, deren Kollektorfläche zu vergrößern. Dies erbringt eine wesentliche Verbesserung der Wirtschaftlichkeit, da sich die Gesamtjahreskosten einer Wärmepumpenanlage zu ca. 78 % aus dem Kapitaldienst und zu 22 % aus den Betriebskosten zusammensetzen. In anderen Worten ausgedrückt hat dies zur Folge, daß bei Installierung einer neuen Wärmepumpenanlage deren Investitionskosten stark verringert werden, jedoch gleichzeitig eine gleichgroße Leistung erzielbar ist, da durch den Einsatz des nichtazeotropen Halogenkohlenwasserstoffgemisches gemäß der Erfindung die einzelnen Betriebsparameter der Wärmepumpe erheblich verbessert und in jedem Fall bei verlustarmen Leistungsstungsregelungen große Temperaturspannen überbrückt werden können.

Die Erfindung wird im folgenden anhand eines konkreten Ausführungsbeispiels näher erläutert.

Eine nach dem Kompressionsprinzip betriebene und durch ein Expansionsventil gesteuerte Wärmepumpe, welche die Bauteile Kompressor mit 5 PS Nennleistung, Koaxialverdampfer, Koaxialkondensator, Expansionsventil mit Fühler (Steuerglied), Filtertrockner, Schauglas und Verbindungsrohrleitungen aufwies, wurde nacheinander einmal mit dem meistbenutzten Einstoffkältemittel R 22 (= $CH F_2 Cl$ = Chlordifluormethan) und anschließend mit dem erfindungsgemäßen nichtazeotropen Halogenkohlenwasserstoffgemisch B (= $CH F_2 Cl/C F_3 Br$), $\xi$ = 0,25 kg/kg gefahren, wobei im letztgenannten Fall nich nur der Arbeitsmittelkreis der Wärmepumpe, sondern auch das Steuerglied des Expansionsventils, d. h. dessen Fühler, mit dem betreffenden nichtazeotropen Halogenkohlenwasserstoffgemisch gefüllt war.

Mit derselben Wärmepumpe wurden bei verschiedenen Betriebspunkten folgende Ergebnisse erzielt :

| Heizungsvorlauftemperatur [ $^{o}$C ] | | + 35 | + 35 | + 35 | + 35 |
|---|---|---|---|---|---|
| Primärenergietemperatur [ $^{o}$C ] | | – 10 | – 5 | 0 | + 10 |
| Wärmepumpenheizleistung  kcal/h | R 22 | 5500 | 6850 | 8500 | 11300 |
| | B | 6800 | 8250 | 9800 | 12750 |
| $\Delta$t  Primärenergiemedium [Grad] | R 22 | 1,8 | 2,5 | 3,35 | 4,2 |
| | B | 2,6 | 3,6 | 4,64 | 6,72 |
| Druckverhältnis | R 22 | 8,8 | 6,4 | 4,93 | 3,5 |
| | B | 7,6 | 6,0 | 5,07 | 3,91 |
| Heißgastemperatur· [ $^{o}$C ] | R 22 | 115 | 93 | 83 | 82 |
| | B | 83 | 60 | 66 | 80 |

Die sich bei der Verwendung des erfindungsgemäßen nichtazeotropen Halogenkohlenwasserstoffgemischs ergebenden bedeutenden Vorteile, wie höhere Heizleistung bei sonst gleicher Apparatur, geringeres Druckverhältnis, höhere Entnahme aus dem Primärenergiemedium und niedrigere Heißgastemperaturen, lassen sich aus den Vergleichsmessungen klar erkennen.

Die Verwendung eines der erfindungsgemäßen nichtazeotropen Halogenkohlenwasserstoffgemische zeigt deutlich, daß mit dem gleichen Kapitaleinsatz Leistungssteigerungen von 35 % und mehr erzielt werden können, was eine außerordentliche Wirtschaftlichkeitsverbesserung der Wärmepumpe darstellt.

Die einzelnen angegebenen Arbeitsmittelkomponenten bedeuten :

$CF_2 Cl_2$ = Dichlordifluormethan
$CF_3 Cl$ = Chlortrifluormethan
$CH F Cl_2$ = Dichlorfluormethan
$CH F_2 Cl$ = Chlordifluormethan
$CF_2 Cl CF_2 Cl$ = Dichlortetrafluoräthan
$CF_2 Cl CF_3$ = Chlorpentafluoräthan
$CH F_2 Cl/CF_2 Cl CF_3$ = Azeotrop aus Chlordifluormethan und Chlorpentafluoräthan
$CF_3 Br$ = Bromtrifluormethan

**Patentansprüche**

1. Verwendung eines nichtazeotropen Arbeitsmittelgemischs aus der nachstehenden Gruppe von Zwei- oder Mehrstoff-Halogenkohlenwasserstoffgemischen mit der jeweils angegebenen Zusammensetzung und dem jeweiligen Gewichtsanteil $\xi$ der erstgenannten Komponente

$CH F_2 Cl/C F_3 Cl$, $\xi$ = 0,75-0,90 kg/kg
$C F_2 Cl_2/C F_3 Cl$, $\xi$ = 0,7-0,9 kg/kg
$CH F_2 Cl/C F_3 Br$, $\xi$ = 0,10-0,65 kg/kg
$C F_2 Cl_2/C F_3 Br$, $\xi$ = 0,1-0,5 kg/kg
$C F_2 Cl C F_3/C F_3 Br$, $\xi$ = 0,05-0,65 kg/kg
$[CH F_2 Cl/C F_2 Cl C F_3]/C F_3 Br$, $\xi$ = 0,15-0,35 kg/kg
$C F_2 Cl_2/CH F_2 Cl$, $\xi$ = 0,30-0,65 kg/kg
$C F_2 Cl C F_2 Cl/CH F_2 Cl$, $\xi$ = 0,30-0,65 kg/kg
$CH F Cl_2/CH F_2 Cl$, $\xi$ = 0,30-0,65 kg/kg

**0 059 322**

für Wärmepumpen, die nach dem Kompressionsprinzip betrieben und durch ein Expansionsventil oder Kapillarrohr geregelt werden, wobei sowohl der Arbeitsmittelkreis der Wärmepumpe als auch das Steuerglied des Expansionsventils oder das Kapillarrohr mit jeweils dem gleichen nichtazeotropen Halogenkohlenwasserstoffgemisch gefüllt sind.

2. Verwendung des Arbeitsmittelgemischs nach Anspruch 1, wobei der Gewichtsanteil $\xi$ der jeweils erstgenannten Komponente der folgenden nichtazeotropen Halogenkohlenwasserstoffgemische die nachstehend genannten Bereichsgrenzen aufweist :

$CH F_2 Cl/C F_3 Cl$, $\xi = 0,85\text{-}0,90$ kg/kg
$C F_2 Cl_2/C F_3 Cl$, $\xi = 0,8\text{-}0,9$ kg/kg
$CH F_2 Cl/C F_3 Br$, $\xi = 0,2\text{-}0,4$ kg/kg
$C F_2 Cl_2/C F_3 Br$, $\xi = 0,35\text{-}0,50$ kg/kg
$C F_2 Cl CF_3/C F_3 Br$, $\xi = 0,3\text{-}0,5$ kg/kg
$CH F_2 Cl/CF_2 Cl CF_3/C F_3 Br$, $\xi = 0,2\text{-}0,3$ kg/kg
$C F_2 Cl_2/CH F_2 Cl$, $\xi = 0,4\text{-}0,6$ kg/kg
$C F_2 Cl CF_2 Cl/CH F_2 Cl$, $\xi = 0,4\text{-}0,6$ kg/kg
$CH F Cl_2/CH F_2 Cl$, $\xi = 0,4\text{-}0,6$ kg/kg.

3. Verwendung eines nichtazeotropen Arbeitsmittelgemischs aus der nachstehenden Gruppe von Zwei- oder Mehrstoff-Halogenkohlenwasserstoffgemischen mit der jeweils angegebenen Zusammensetzung und dem jeweiligen Gewichtsanteil $\xi$ der erstgenannten Komponente

$CH F_2 Cl/C F_3 Cl$, $\xi = 0,75\text{-}0,90$ kg/kg
$C F_2 Cl_2/C F_3 Cl$, $\xi = 0,7\text{-}0,9$ kg/kg
$CH F_2 Cl/C F_3 Br$, $\xi = 0,10\text{-}0,65$ kg/kg
$C F_2 Cl_2/C F_3 Br$, $\xi = 0,1\text{-}0,5$ kg/kg
$C F_2 Cl C F_3/C F_3 Br$, $\xi = 0,05\text{-}0,65$ kg/kg
$[CH F_2 Cl/C F_2 Cl C F_3]/C F_3 Br$, $\xi = 0,15\text{-}0,35$ kg/kg
$C F_2 Cl_2/CH F_2 Cl$, $\xi = 0,30\text{-}0,65$ kg/kg
$C F_2 Cl C F_2 Cl/CH F_2 Cl$, $\xi = 0,30\text{-}0,65$ kg/kg
$CH F Cl_2/CH F_2 Cl$, $\xi = 0,30\text{-}0,65$ kg/kg

für Wärmepumpen, die nach dem Kompressionsprinzip betrieben und durch ein Expansionsventil geregelt werden, wobei das Steuerglied des Expansionsventils nur mit der tiefersiedenden Komponente des im Arbeitsmittelkreis der Wärmepumpe befindlichen nichtazeotropen Halogenkohlenwasserstoffgemischs gefüllt ist.

**Claims**

1. The use of a non-azeotropic refrigerant composition from the following group of two-component or multi-component halogenated hydrocarbon mixture, the composition being specified in each case with the respective proportion by weight $\xi$ of the first-mentioned component :

$CH F_2 Cl/C F_3 Cl$, $\xi = 0.75\text{-}0.90$ kg/kg
$C F_2 Cl_2/C F_3 Cl$, $\xi = 0.7\text{-}0.9$ kg/kg
$CH F_2 Cl/C F_3 Br$, $\xi = 0.10\text{-}0.65$ kg/kg
$C F_2 Cl_2/C F_3 Br$, $\xi = 0.1\text{-}0.5$ kg/kg
$C F_2 Cl C F_3/C F_3 Br$, $\xi = 0.05\text{-}0.65$ kg/kg
$[CH F_2 Cl/C F_2 Cl C F_3]/C F_3 Br$, $\xi = 0.15\text{-}0.35$ kg/kg
$C F_2 Cl_2/CH F_2 Cl$, $\xi = 0.30\text{-}0.65$ kg/kg
$C F_2 Cl C F_2 Cl/CH F_2 Cl$, $\xi = 0.30\text{-}0.65$ kg/kg
$CH F Cl_2/CH F_2 Cl$, $\xi = 0.30\text{-}0.65$ kg/kg

for heat pumps which are operated on the compression principle and which are regulated by an expansion valve or a capillary tube, both the refrigerant circuit of the heat pump and the control member of the expansion valve or the capillary tube in each case being filled with the same non-azeotropic halogenated hydrocarbon composition.

2. The use of the refrigerant composition as claimed in claim 1, wherein the proportion by weight $\xi$ of the respective first-mentioned component of the following non-azeotropic halogenated hydrocarbon compositions have the following range limits :

$CH F_2 Cl/C F_3 Cl$, $\xi = 0.85\text{-}0.90$ kg/kg
$C F_2 Cl_2/C F_3 Cl$, $\xi = 0.8\text{-}0.9$ kg/kg

$CH F_2 Cl/C F_3 Br$, $\xi = 0.2$-$0.4$ kg/kg
$C F_2 Cl_2/C F_3 Br$, $\xi = 0.35$-$0.50$ kg/kg
$C F_2 Cl CF_3/C F_3 Br$, $\xi = 0.3$-$0.5$ kg/kg
$CH F_2 Cl/CF_2 Cl CF_3/C F_3 Br$, $\xi = 0.2$-$0.3$ kg/kg
$C F_2 Cl_2/CH F_2 Cl$, $\xi = 0.4$-$0.6$ kg/kg
$C F_2 Cl CF_2 Cl/CH F_2 Cl$, $\xi = 0.4$-$0.6$ kg/kg
$CH F Cl_2/CH F_2 Cl$, $\xi = 0.4$-$0.6$ kg/kg

3. The use of an non-azeotropic refrigerant composition from the following group of two-component or multi-component halogenated hydrocarbon compositions, the composition being stated in each case with the respective proportion by weight $\xi$ of the first-mentioned component :

$CH F_2 Cl/C F_3 Cl$, $\xi = 0.75$-$0.9$ kg/kg
$C F_2 Cl_2/C F_3 Cl$, $\xi = 0.7$-$0.9$ kg/kg
$CH F_2 Cl/C F_3 Br$, $\xi = 0.10$-$0.65$ kg/kg
$C F_2 Cl_2/C F_3 Br$, $\xi = 0.1$-$0.5$ kg/kg
$C F_2 Cl C F_3/C F_3 Br$, $\xi = 0.05$-$0.65$ kg/kg
$[CH F_2 Cl/C F_2 Cl C F_3]/C F_3 Br$, $\xi = 0.15$-$0.35$ kg/kg
$C F_2 Cl_2/CH F_2 Cl$, $\xi = 0.30$-$0.65$ kg/kg
$C F_2 Cl C F_2 Cl/CH F_2 Cl$, $\xi = 0.30$-$0.65$ kg/kg
$CH F Cl_2/CH F_2 Cl$, $\xi = 0.30$-$0.65$ kg/kg

for heat pumps which operate on the compression principle and which are regulated by an expansion valve, the control member of the expansion valve being filled with only the component with the lower boiling point of the non-azeotropic halogenated hydrocarbon composition located in the refrigerant circuit of the heat pump.

**Revendications**

1. Application d'un mélange non azéotrope au fonctionnement de pompes à chaleur, choisi à partir du groupe ci-après de mélanges de deux ou plusieurs produits hydrocarbonés, halogénés, chaque fois avec la composition indiquée et la proportion pondérale du constituant nommé en premier

$CHF_2Cl/CF_3Cl$, $\xi = 0{,}75$-$0{,}90$ kg/kg
$CF_2Cl_2/CF_3Cl$, $\xi = 0{,}7$-$0{,}9$ kg/kg
$CHF_2Cl/CF_3Br$, $\xi = 0{,}10$-$0{,}65$ kg/kg
$CF_2Cl_2/CF_3Br$, $\xi = 0{,}1$-$0{,}5$ kg/kg
$CF_2ClCF_3/CF_3Br$, $\xi = 0{,}05$-$0{,}65$ kg/kg
$[CHF_2Cl/CF_2ClCF_3]/CF_3Br$, $\xi = 0{,}15$-$0{,}35$ kg/kg
$CF_2Cl_2/CHF_2Cl$, $\xi = 0{,}30$-$0{,}65$ kg/kg
$CF_2ClCF_2Cl/CHF_2Cl$, $\xi = 0{,}30$-$0{,}65$ kg/kg
$CHFCl_2/CHF_2Cl$, $\xi = 0{,}30$-$0{,}65$ kg/kg

ces pompes à chaleur fonctionnant d'après le principe de compression et étant réglées par une soupape d'expansion ou un tube capillaire, au cours de laquelle aussi bien le circuit de moyen de fonctionnement, que le corps de commande de la soupape d'expansion ou du tube capillaire, sont remplis chaque fois avec le même mélange non azéotrope hydrocarboné, halogéné.

2. Application d'un mélange de moyens de fonctionnement selon la revendication 1, au cours de laquelle la proportion pondérale du premier nommé constituant, des mélanges non azéotropes hydrocarbonés halogénés suivants, présente les limites de composition ci-après :

$CHF_2Cl/CF_3Cl$, $\xi = 0{,}85$-$0{,}90$ kg/kg
$CF_2Cl_2/CF_3Cl$, $\xi = 0{,}8$-$0{,}9$ kg/kg
$CHF_2Cl/CF_3Br$, $\xi = 0{,}2$-$0{,}4$ kg/kg
$CF_2Cl_2/CF_3Br$, $\xi = 0{,}35$-$0{,}50$ kg/kg
$CF_2ClCF_3/CF_3Br$, $\xi = 0{,}3$-$0{,}5$ kg/kg
$CHF_2Cl/CF_2ClCF_3/CF_3Br$, $\xi = 0{,}2$-$0{,}3$ kg/kg
$CF_2Cl_2/CHF_2Cl$, $\xi = 0{,}4$-$0{,}6$ kg/kg
$CF_2ClCF_2Cl/CHF_2Cl$, $\xi = 0{,}4$-$0{,}6$ kg/kg
$CHFCl_2/CHF_2Cl$, $\xi = 0{,}4$-$0{,}6$ kg/kg

3. Application d'un mélange non azéotrope de moyen de fonctionnement, choisi à partir du groupe ci-après de mélanges de deux ou plusieurs produits hydrocarbonés halogénés, avec les compositions et proportions pondérales suivantes du constituant nommé en premier

**0 059 322**

$CHF_2Cl/CF_3Cl$, $\xi = 0{,}75\text{-}0{,}90$ kg/kg
$CF_2Cl_2/CF_3Cl$, $\xi = 0{,}7\text{-}0{,}9$ kg/kg
$CHF_2Cl/CF_3Br$, $\xi = 0{,}10\text{-}0{,}65$ kg/kg
$CF_2Cl_2/CF_3Br$, $\xi = 0{,}1\text{-}0{,}5$ kg/kg
$CF_2ClCF_3/CF_3Br$, $\xi = 0{,}05\text{-}0{,}65$ kg/kg
$[CHF_2Cl/CF_2ClCF_3]/CF_3Br$, $\xi = 0{,}15\text{-}0{,}35$ kg/kg
$CF_2Cl_2/CHF_2Cl$, $\xi = 0{,}30\text{-}0{,}65$ kg/kg
$CF_2ClCF_2Cl/CHF_2Cl$, $\xi = 0{,}30\text{-}0{,}65$ kg/kg
$CHFCl_2/CHF_2Cl$, $\xi = 0{,}30\text{-}0{,}65$ kg/kg

pour pompes à chaleur, qui fonctionnent selon le principe de compression et sont réglées par une soupape d'expansion, au cours de laquelle le corps de commande de la soupape d'expansion n'est rempli qu'avec le constituant à plus bas point d'ébullition du mélange non azéotrope hydrocarboné, halogéné, se trouvant dans le circuit de moyen de fonctionnement de la pompe à chaleur.

7